# EUROPÄISCHE PATENTSCHRIFT

(11) **EP 2 732 897 B1**
(45) Veröffentlichungstag und Bekanntmachung des Hinweises auf die Patenterteilung: **03.05.2017**
(21) Anmeldenummer: 14154641.6
(22) Anmeldetag: 19.12.2012
(51) Int. Cl.: B23H 7/10, B23H 7/26

(54) **Vorrichtung zum rotativen Drahterodieren mit einer schwenkbaren Drahtführung**
Device for rotational wire electroerosion with pivoting wire guide
Appareil d'électroérosion rotatif à fil ayant un guide-fil inclinable

(30) Priorität: 21.12.2011 CH 20182011
(43) Veröffentlichungstag der Anmeldung: 21.05.2014
(62) Teilanmeldung aus: 12198154.2
(73) Patentinhaber: Fritz Studer AG, 3612 Steffisburg (CH)
(72) Erfinder: Weingärtner, Eduardo, 8044 Zürich (CH); Wehrli, Peter, 6612 Ascona (CH); Tobler, Karl, 6673 Maggia (CH); Klotz, Michael, 3612 Steffisburg (CH); Fiebelkorn, Frank, 3600 Thun (CH)
(74) Vertreter: Witte, Weller & Partner Patentanwälte mbB

(56) Entgegenhaltungen:
- EP-A2- 1 535 686
- JP-A- H0 768 422
- US-A1- 2010 212 647
- WEINGARTNER E ET AL: "Special wire guide for on-machine wire electrical discharge dressing of metal bonded grinding wheels", CIRP ANNALS, ELSEVIER BV, NL, CH, FR, Bd. 59, Nr. 1, 1. Januar 2010 (2010-01-01) , Seiten 227-230, XP027199679, ISSN: 0007-8506 [gefunden am 2010-04-07]

## Beschreibung

Die vorliegende Erfindung betrifft eine Vorrichtung zum rotativen Drahterodieren eines Werkstückes mit einer scheibenförmigen Drahtführung zur Führung einer drahtförmigen Elektrode beim rotativen Drahterodieren.

Drahterodiermaschinen (WEDM) weisen meist zwei voneinander beabstandete, übereinanderliegende Drahtführungen auf. Die Drahtführungen können gegenüber dem Werkstück Relativbewegungen in X- und Y-Richtung ausführen. Eine der beiden Drahtführungen kann gegenüber der anderen Drahtführung zusätzlich eine Relativbewegung in U-und V-Richtung ausführen. Die beiden Drahtführungen können entlang beliebiger zweidimensionaler Konturen geführt werden. Auf diese Weise können sog. zylindrische, d.h. vertikale und/oder konische Drahterosionsbearbeitungen ausgeführt werden. Durch Integration einer Zusatzachse oder -Spindel ist darüber hinaus ein rotatives Drahterodieren bzw. funkenerosives Drehen möglich.

Die Drahtführungen spielen bei der Bearbeitungsgenauigkeit eine ganz wesentliche Rolle. Universal-WEDM setzen üblicherweise geschlossene sogenannte ziehsteinförmige Führungen ein. Auch offene V-Führungen werden von einigen WEDM-Herstellern eingesetzt; V-Führungen haben insbesondere im zweidimensionalen Schnitt eine unübertroffene Genauigkeit, benötigen jedoch entweder eine Hilfsführung direkt gegenüber der V-Führung, oder eine Vorführung vor bzw. nach der eigentlichen V-Führung, oder eine geeignete geometrische Ausbildung des Drahtlaufsystems um sicherzustellen, dass die Drahtelektrode immer in der V-Führung anliegt.

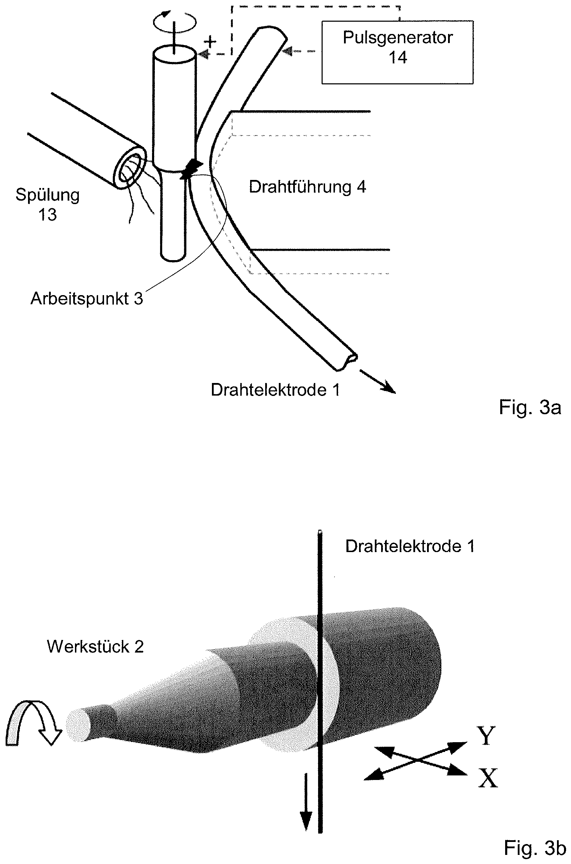

Bei einer Verfahrensvariante der Senkerosion, dem funkenerosiven Schleifen (WEDG) wird eine rotierende vertikal angeordnete stabförmige Elektrode mit Hilfe einer quer dazu laufenden Drahtelektrode profiliert. Bei einer Verfahrensvariante der Drahterosion dreht das Werkstück während der Bearbeitung (RWEDM) mit bis zu mehreren tausend Umdrehungen pro Minute. Hierzu ist die WEDM wie erwähnt mit einer Rotationsspindel oder allenfalls einer Rotationsachse ausgestattet, die beispielsweise parallel zur Y-Achse angeordnet ist. Die Drahtelektrode verläuft hierbei vertikal, senkrecht zur Rotationsspindel. Das Werkstück dreht währenddessen die Drahtelektrode durch Bewegung der X- und Y-Achse eine Kontur einbringt, wie auf einer Drehbank (siehe Figur 3b).

Auf der Basis dieser Verfahrensvarianten wurden diverse Spezialanwendungen entwickelt. Insbesondere eröffnen sich neue Möglichkeiten zur Profilierung metallgebundener Superabrasivschleifscheiben mittels Drahterosion (WEDD). Diese Schleifscheiben bestehen aus einem Superabrasivkorn, Diamant oder cBN, dass in eine metallische Bindung, typischerweise Bronze, Eisen oder Kobalt eingebettet ist. Solche Bindematerialien haben ausgezeichnete, für den Schleifprozess wesentliche Eigenschaften, insbesondere in Bezug auf Formstabilität, Kornbindung, Temperaturbeständigkeit und Wärmeleitfähigkeit. Konventionelle Abrichtverfahren mit Einkorndiamant, drehender SiC-Scheibe, usw. sind bei Metallbindungen ineffizient, da der Verschleiss am Abrichtwerkzeug beträchtlich ist. Besonders bei der Herstellung kleiner Radien stossen diese Abrichtverfahren an ihre Grenzen: je feiner das Konturmerkmal desto höher der Abrichtaufwand. Ausserdem sind die mit den traditionellen Abrichtverfahren erzielbaren Kornüberstände naturgemäss vergleichsweise gering.

Metallbindungen der Superabrasivschleifscheiben sind grundsätzlich leitfähig und somit gut erodierbar. Das nichtleitende Korn wird hingegen nicht direkt abgetragen.

Elektroerosive Verfahren eignen sich demnach zum Profilieren und Schärfen metallgebundener Superabrasivschleifscheiben, da selektiv das Bindematerial abgetragen wird. Somit lassen sich mittels Elektroerosion auch hohe Kornüberstände erzeugen.

Die Drehung des Werkstücks bei rotativen Drahterodierverfahen (RWEDM, WEDG, WEDD) ist sehr günstig für den Prozess, weil durch Mitnahme des Dielektrikums die Spaltspülung forciert wird; je höher die Drehzahl und Werkstückdurchmesser desto höher die Umfangsgeschwindigkeit und somit die Spülwirkung. Die Spülbedingungen bei rotativen Drahterodierverfahren sind vergleichsweise gut, weil das Dielektrikum meist unbehindert an den Ort der Funkenentladung gelangen kann.

Beim rotativen Drahterodierverfahren kann an sich die konventionelle WEDM-Führungsanordnung eingesetzt werden, d.h. eine obere und eine untere Drahtführung, wodurch die Drahtelektrode über eine bestimmte "freie Spannweite" gegenüber dem Werkstück geführt wird. Die Drahtelektrode wird jedoch bei dieser Anordnung durch Prozesskräfte und besonders durch die bei der Rotation des Werkstücks verursachten hydraulischen Kräfte abgelenkt. Die Ablenkung ist somit von der Umfangsgeschwindigkeit abhängig. Bei den erwähnten Schleifscheiben ist dieser Effekt noch durch die poröse Oberfläche verstärkt. Die Drahtablenkung ist unerwünscht, da sie für die Prozesskontrolle hinderlich ist und direkt die Konturgenauigkeit beeinflusst. Insofern wäre eine "freie Spannweite" gleich null wünschenswert, d.h. eine Führung unmittelbar am Arbeitspunkt.

Im Stand der Technik werden diverse Führungsanordnungen für rotative Drahterodierverfahren beschrieben. Zum WEDG-Verfahren sei hier vorerst die Patentschrift DE1954180 von Cholodnov genannt. Cholodnov zeigt ein Verfahren mit dem eine stabförmige Elektrode mit Hilfe einer quer dazu verlaufende Drahtelektrode profiliert wird. Die Drahtelektrode ist, wie voran beschrieben über eine bestimmte Distanz frei gespannt.

In der Veröffentlichung "Wire electro-discharge grinding for micro-machining" aus den CIRP Annalen 34/1/1985, pp.431-434 zeigt Masuzawa eine einteilige Drahtführung zur Führung eine Drahtelektrode unmittelbar am Arbeitspunkt (siehe Figur 3a). Damit ist die Drahtelektrode bestmöglich geführt, und die gewünschte Kontur kann präzise abgebildet werden. Masuzawas Drahtführung führt die Drahtelektrode auch unmittelbar hinter der Wirkstelle der erosiven Bearbeitung. Damit ist die Drahtführung in diesem Bereich bereits bei üblichen Erosionsleistungen einer extremen thermischen Beanspruchung ausgesetzt, wodurch die Führung selbst beschädigt wird. Weiterhin ist durch die Nähe zum Funkenspalt mit einer Ablagerung wiederverfestigter Erosionspartikel zu Rechnen, was selbstverständlich auch unerwünscht ist.

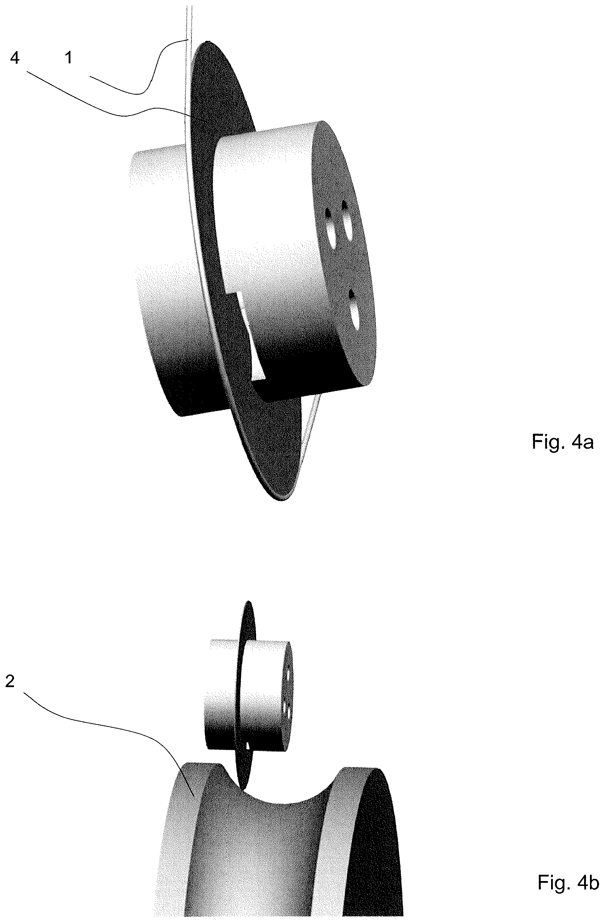

Zur drahterosiven Profilierung metallgebundener Superabrasivschleifscheiben (wire electrical discharge dressing, WEDD) wird in den CIRP Annalen 59/1/2010, pp.227-230 "Special wire guide for on-machine wire electrical discharge dressing of metal bonded grinding wheels", eine spezielle Drahtführung vorgeschlagen, zur stabilen Führung einer Drahtelektrode im Bereich des Funkenspalts und verbesserten Zuführung des Dielektrikums (siehe Figuren 4a, 4b). Diese spezielle Drahtführung kann als nächstliegender Stand der Technik angesehen werden und besteht im Wesentlichen aus einer dünnen, etwa 0.4mm breite Keramikscheibe die zwischen zwei Flanschen eingespannt ist. Die Breite der Scheibe ist also in der Grössenordnung des Drahtdurchmessers. Sie weist ihrem Umfang entlang eine V-förmige Nut zur sicheren Führung der Drahtelektrode auf. Die scheibenförmige Drahtführung ist stationär, d.h. die Drahtelektrode schleift der V-Nut entlang. In der erwähnten CIRP Veröffentlichung ist auch eine besondere Spülung beschrieben, bei der Dielektrikum in radialer Richtung aus Öffnungen in den bereits erwähnten beiden Flanschen herausströmen kann. Diese Spülung ist besonders effizient weil das Dielektrikum auch bei hohen Drehzahlen in genügender Menge in den Funkenspalt gelangt (siehe Öffnung im einen Flansch in der Figur 4a).

Die voran beschriebene und in den Figuren 4a und 4b dargestellte scheibenförmige Drahtführung bildet demnach einen etwa 5 mm langen, dünnen Steg; bei einem Drahtelektrodendurchmesser 0.33 mm wird eine Scheibenbreite 0.4 mm vorgeschlagen. Mit dieser Gestaltung möchte man die Drahtelektrode in unmittelbarer Nähe zum Funkenspalt stützen, und damit eine Ablenkung vermeiden. Dadurch soll man ein beliebiges Profil in die Schleifscheibe einbringen können, ohne dass dabei die Drahtelektrode bzw. Drahtführung in Kontakt mit dem Superabrasivkorn kommen.

Die scheibenförmige Ausbildung der Drahtführung genügt jedoch nicht um dieser Anforderung immer gerecht zu werden. Ab einer bestimmten Korngrösse ist, sobald der Kornüberstand im Bereich der Spaltweite des Funkenspalt liegt, die Gefahr der Berührung und somit Drahtriss oder Beschädigung der scheibenförmigen Drahtführung gegeben, weil das nichtleitende Korn für den EDM-Prozess "unsichtbar" ist. Ausserdem ist die radiale Spülung bei der Herstellung radialer Profilabschnitte durch die scheibenförmige Drahtführung selbst behindert. Ungünstige Spülbedingungen können den Prozess negativ beeinflussen und führen wiederum zu Drahtriss. Weiterhin ist auch diese scheibenförmig ausgebildete Drahtführung der thermischen Beanspruchung des Erosionsprozesses ausgesetzt, und somit auf kurz oder lang zum Versagen verurteilt.

Aus der JP 7-068422 A ist eine Vorrichtung zum rotativen Drahterodieren eines Werkstücks bekannt.

Zusammenfassend gelingt es mit bekannten Drahtführungsanordnungen nicht oder zumindest nur unzufriedenstellend, die Drahtelektrode an ein rotierendes Werkstück heranzuführen, ohne dass dabei die Drahtelektrode abgelenkt wird, das Werkstück berührt wird oder die Spülung beeinträchtigt wird.

Die Erfindung zielt darauf ab, das rotative Drahterodierverfahren zu verbessern, insbesondere im Hinblick auf das Profilieren und Schärfen metallgebundener Schleifscheiben.

Diese Aufgabe wird erfindungsgemäss durch den Gegenstand des Anspruches 1 gelöst. Danach ist eine scheibenförmige Drahtführung zur Führung einer Drahtelektrode für das rotative Drahterodieren eines Werkstückes vorgeschlagen, wobei die Dicke der scheibenförmigen Drahtführung kleiner ist als der 1,5-fache Betrag des Durchmessers der Drahtelektrode, wobei die Drahtführung im Weiteren am Umfang eine Führungssnut aufweist, dadurch gekennzeichnet, dass die Drahtführung im Wirkbereich der Funkenerosion eine Aussparung aufweist. Auf diese Weise lässt sich die Drahtelektrode auch bei der Herstellung von radialen Konturabschnitten an das Werkstück heranführen, ohne dass die Spaltspülung beeinträchtigt wird. Ausserdem ist im Falle der Bearbeitung einer metallgebundenen Schleifscheibe das Risiko einer Berührung zwischen Drahtführung und Schleifkorn vermindert.

Weitere Vorteile, Merkmale und Einzelheiten der Erfindung ergeben sich aus der nachfolgenden Beschreibung bevorzugter Ausführungsbeispiele sowie anhand der Zeichnungen.

Die Erfindung wird nachfolgend anhand der Figuren und Ausführungsbeispiele näher erläutert, wobei gleiche Elemente mit gleichen Bezugszeichen versehen sind. Es zeigt:
- Fig. 1: eine Seitenansicht einer Vorrichtung zum rotativen Drahterodieren mit einer scheibenförmig ausgebildeten Drahtführung
- Fig. 2a,b: eine Draufsicht der Drahtführung gemäss Figur 1 in der Normallage, d.h. 0° und eine Draufsicht der Drahtführung gemäss Figur 1 bei einer Winkellage von 15°
- Fig. 3a,b: Einrichtungen für das funkenerosive schleifen (WEDG) bzw. für das funkenerosive drehen (RWEDM) aus dem Stand der Technik
- Fig. 4a,b: Scheibenförmige Drahtführung gemäss Stand der Technik
- Fig. 5a,b: Details zur scheibenförmigen Drahtführung

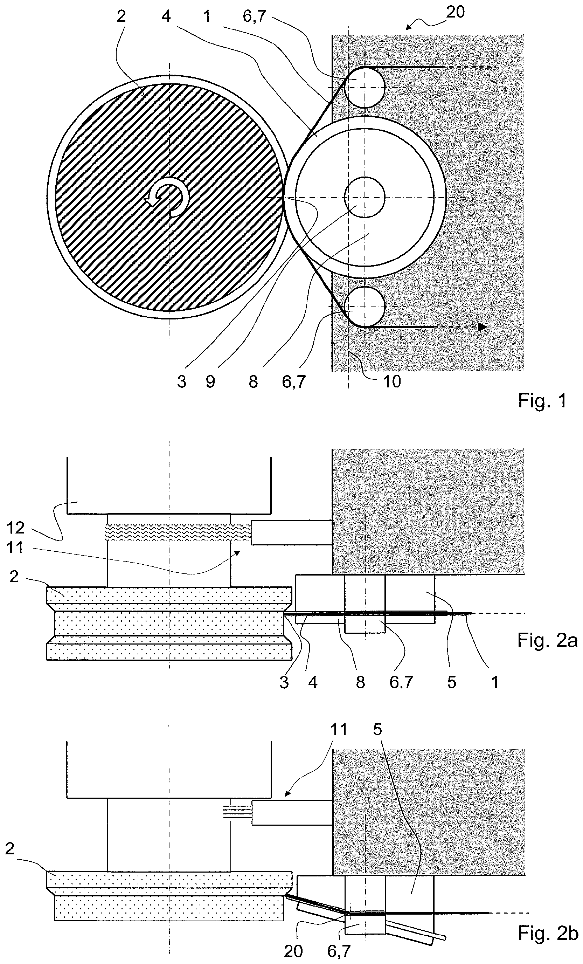

Die Figur 1 zeigt zusammen mit den Figuren 2a und 2b in schematischer Darstellung, wie zur Einstellung der relativen Winkellage zwischen Drahtführung 4 und Werkstück 2 - um eine Schwenkachse 10 parallel zur Drahtlaufrichtung am Arbeitspunkt 3 - beispielsweise die Drahtführung 4 selbst, eine der Drahtführung 4 zugeordnete Drahtführungshalterung 5 oder die gesamte Vorrichtung für das rotative Drahterodieren einstellbar ausgebildet sein könnte. Alternativ oder komplementär ist zur Einstellung der relativen Winkellage zwischen Drahtführung 4 und Werkstück 2 um eine Achse parallel zur Drahtlaufrichtung die Spindel, in dem das Werkstück eingespannt ist, einstellbar ausgebildet. Die relative Winkellage zwischen Drahtführung 4 und Werkstück 2 um eine Achse parallel zur Drahtlaufrichtung am Arbeitspunkt ist also werkstückseitig oder werkzeugseitig einstellbar. Die in den Figuren dargestellte Drahtführung 4 ist stationär, d.h. nicht drehend an der - in den Figuren 2a und 2b unterschiedlich ausgeführten - Drahtführungshalterung 5 montiert. Die Drahtelektrode 1 wird daher über eine Nut in der Drahtführung 4 geführt bzw. abgezogen.

Abhängig von der Bearbeitungsaufgabe können sich unterschiedliche Ausführungsformen als vorteilhaft erweisen. In einer Ausgestaltung der Erfindung ist die relative Winkellage zwischen Drahtführung 4 und Werkstück 2 um eine Achse parallel zur Drahtlaufrichtung fest einstellbar. Hierzu ist die mit einer scheibenförmig ausgebildeten Drahtführung 4 ausgestatteten Vorrichtung zum rotativen Drahterodieren 20 eines Werkstückes beispielsweise mit einer oder mehreren austauschbaren Drahtführungshalterungen 5 ausgestattet (vergleiche Fig. 2a mit 2b), mit denen die Drahtführung 4 in die gewünschte Winkellage gegenüber dem Werkstück 2 gebracht werden kann. Die dargestellten, austauschbaren Drahtführungshalterungen 5 sind so ausgebildet, dass die darauf montierte Drahtführung 4 jeweils einen unterschiedlichen Winkel zum rotierenden Werkstück einnimmt, welcher dem gewünschten festen Schwenkwinkel entspricht. Bevorzugt ist nebst einer Ausgangsposition von 0° zumindest ein fester Schwenkwinkel im Bereich zwischen +20° und -20° in mehreren Stufen bzw. durch die Verwendung unterschiedlicher Drahtführungshalterungen 5 einstellbar.

In einer weiteren, nicht dargestellten Ausführungsform ist die Drahtführungshalterung schwenkbar gelagert. Hierzu kann der Winkel der Drahtführungshalterung und damit der Winkel der eigentlichen Drahtführung, beispielsweise präzise um die Schwenkachse 10 eingestellt werden. Diese Schwenkachse kann natürlich eine Arretierung umfassen, damit eine bestimmte Winkellage fest eingestellt werden kann. Die Schwenkachse ist in bekannter weise gelagert, beispielsweise mittels Kugellager oder Gleitlager.

Alternativ zur voran beschriebenen Schwenkachse kann eine Schwenkeinheit zur Einstellung des Schwenkwinkels mit Festkörperführungen bzw. flexibler Strukturen ausgestattet sein. Festkörperführungen haben gegenüber traditionellen Lagerungen bekanntlich ganz wesentliche Vorteile, insbesondere keine Hysterese, kein Spiel, kein Verschleiss, geringste Reibungsverluste, keine Notwendigkeit für die Schmierung, und ausserdem sind sie der Verschmutzung gegenüber unempfindlich. Durch geschickte Anordnung der erwähnten flexiblen Strukturen lässt sich die Schwenkachse in bekannter Weise auf den Arbeitspunkt (TCP) verlagern, also hier auf die Achse der Drahtelektrode am Arbeitspunkt. Auf diese Weise erübrigt sich eine grobe Positionskorrektur bei unterschiedlichen Winkellagen. Allerdings sind Festkörperführungen nur für beschränkte Schwenkwinkel anwendbar. Vorzugsweise sind die Festkörperführungen monolithisch gefertigt, beispielsweise Drahterosiv. Weiterhin weisen die Festkörperführungen vorzugsweise Wegbegrenzungen in Form mechanischer Anschläge auf, die bei monolithischer Bauweise ebenfalls integriert werden können.

In einer bevorzugen Ausgestaltung ist zur Einstellung der relativen Winkellage zwischen Drahtführung und Werkstück ein Antrieb vorgesehen, wobei der Schwenkwinkel in festen Schritten oder Stufenlos eingestellt wird. Auf diese Weise kann die Winkellage der scheibenförmig ausgebildeten Drahtführung automatisch, bzw. gesteuert eingestellt werden. Diese ist besonders vorteilhaft, wenn die Winkellage der scheibenförmigen Drahtführung während der Bearbeitung umgestellt werden muss. Der Antrieb ist dann vorzugsweise mit einer entsprechenden Steuerung/Regelung verbunden.

Wie in den Figuren dargestellt ist, weist die Vorrichtung zur Einstellung der relativen Winkellage zwischen Drahtführung 4 und Werkstück 2 im Bereich vor und/oder nach der scheibenförmig ausgebildeten Drahtführung 4 zumindest eine Hilfsführung auf, vorzugsweise jeweils eine Vorführung 6 und eine Nachführung 7. Vorzugsweise weisen die Hilfsführungen 6,7 eine V-förmig ausgebildete Nut auf, welche die Drahtelektrode 1 sicher zur scheibenförmigen Drahtführung 4 führt. Die zumindest eine Vorführung 6,7 kann gleichzeitig als Stromzuführung für die Drahtelektrode ausgebildet sein.

Zur Kontaktierung des drehenden Werkstückes ist eine weitere Stromzuführung 11 erforderlich. Diese ist beispielsweise wie bekannt als Schleifbürstekontakt, Schleifkohlekontakt oder als schleifende teilweise umschlingende Litze oder Band ausgestaltet (vergleiche Figuren 2a und 2b).

Vorführung 6 und Nachführung 7 sind normalerweise nicht auf der Schwenkeinheit angeordnet, und sind stationär gegenüber dem Drahtlaufsystem (siehe Figur 2b). Deshalb liegt die Schwenkachse 10 der Schwenkeinheit zur Einstellung des Schwenkwinkels in einer Ausgestaltung der Erfindung auf der Verbindungslinie zwischen Vorführung und Nachführung (siehe Figur 1). Idealerweise liegt die Schwenkachse auf der Verbindungslinie zwischen dem letzten Berührungspunkt der Drahtelektrode an der Vorführung und dem ersten Berührungspunkt der Drahtelektrode an der Nachführung (siehe Figuren 1 und 2b). Auf diese Weise bleiben die Ablösebedingungen von der Vorführung bzw. die Einlaufbedingungen zu Nachführung unabhängig des Schwenkwinkels unverändert.

Die Erfindung kann beispielsweise auf einer WEDM für das funkenerosive Drehen eingesetzt werden, indem wie Eingangs erwähnt eine Zusatzachse oder -Spindel eingebaut wird. Hier wird die scheibenförmig ausgebildete winkeleinstellbare Drahtführung zum Beispiel mit der Pinole gekoppelt.

Die Erfindung ist auch für die Anwendung auf kompakten Drahterodiereinheiten geeignet. Eine mit einer scheibenförmig ausgebildeten winkeleinstellbaren Drahtführung ausgestattete Drahterodiereinheit ist vorzugsweise in eine Werkzeugmaschine oder in einer Fertigungsstrasse installiert.

Beispielsweise kann die Erfindung für das Profilieren und Schärfen metallgebundener Schleifscheiben eingesetzt werden. Eine Drahterodiereinheit wird hierzu vorzugsweise direkt in eine Schleifmaschine installiert, wodurch Umspannfehler eliminiert werden und Nebenzeiten reduziert werden. Die Erfindung eignet sich ganz besonders zur Herstellung tiefer Profile und rein radialer Profilabschnitte auf Schleifscheiben wobei der Kontakt zwischen Drahtführung und Abrasivkorn vermieden wird.

Analog dazu können bei Bedarf Werkzeuge mit bestimmter Schneide profiliert, geschärft oder repariert werden. Auch hier besteht die Möglichkeit die Drahterodiereinheit in die Werkzeugmaschine zu installieren. Die Werkzeugmaschine umfasst hierfür vorzugsweise eine angepasste Einrichtung bzw. Steuerung für den Antrieb der Werkzeug-Drehspindel. Anstelle dass diese das Werkzeug wie im normalen Betrieb konstant um die Drehachse dreht, wird in diesem Modus das Werkstück um einen bestimmten Winkel oder in bestimmten Schritten (z.B. 20 oder 60 Grad) um die Rotationsachse jeweils gedreht, dort positioniert (das Werkstück steht still) und dann durch die Drahtelektrode bearbeitet.

Die Erfindung umfasst daher auch die Möglichkeit, dass mit der Vorrichtung zum rotativen Drahterodieren das Werkstück in bestimmten Winkellagen um die Rotationsachse positioniert und in dieser Position durch die Drahtelektrode bearbeitet wird.

Die jeweilige Schneide des zu bearbeitenden Werkstückes wird gegenüber der Drahtführung bzw. Drahtelektrode in die gewünschte Winkellage gebracht, indem das Werkstück um die eigene Achse gedreht und positioniert wird. Somit können in dieser Abwandlung der Erfindung auch Werkzeuge mit bestimmter Schneide direkt an Bord der Werkzeugmaschine bearbeitet werden.

Die schwenkbare Drahtführung erweitert somit den Anwendungsbereich einer solchen Drahterodiereinheit ganz erheblich, da die Herstellung bestimmter Profile erst durch die Erfindung ermöglicht wird.

Aus der vorangehenden Beschreibung geht unter anderem hervor, dass eine hochgenaue scheibenförmige Drahtführung in unmittelbarer Nähe zum Funkenspalt arbeitet. Beim Abrichten superabrasiver Schleifscheiben liegt die scheibenförmige Drahtführung in unmittelbarer Nähe zum Schleifkorn; das Bindematerial wird abgetragen, wodurch auch das Superabrasivkorn herausfällt. Dieses Superabrasivkorn gerät in den Spalt zwischen Drahtführung und Schleifscheibe; eine bestimmte Abnutzung ist unvermeidbar. Aus diesem Grunde ist die scheibenförmige Drahtführung vorteilhaft als austauschbares Element gestaltet. Nachfolgende Ausführungen betreffen eine besondere Ausgestaltung einer scheibenförmigen Drahtführung für das rotative Drahterodieren, insbesondere zur Bearbeitung superabrasiver Schleifscheiben als Werkstück.

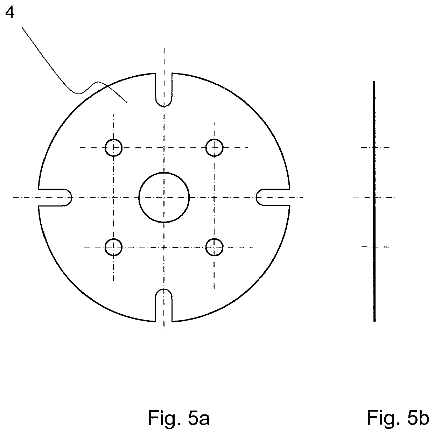

Die folgenden Ausführungen nehmen auf die Figuren 5a und 5b Bezug. So ist die scheibenförmige Drahtführung vorzugsweise als eine monolithische Keramikscheibe ausgeführt, die z.B. aus Siliziumkarbid besteht. Die scheibenförmige Drahtführung weist zumindest an einem Abschnitt ihres Umfangs eine V-förmig ausgebildete Nut zur präzisen Führung der Drahtelektrode. Durch die einteilige Fertigung der Drahtführung ergibt sich automatisch den Vorteil, dass die oberen und unteren Führungsbereiche der V-förmig ausgebildete Nut in der scheibenförmigen Drahtführung perfekt zueinander ausgerichtet sind, also keinen seitlichen Versatz aufweisen.

Um das Anwendungsgebiet der Vorrichtung für das rotative Drahterodieren nicht einzugrenzen, darf die scheibenförmige Drahtführung eine bestimmte Breite nicht überschreiten. Insbesondere ist bei der Bearbeitung die Berührung zwischen Führung und Werkstück zu vermeiden. Die Breite der scheibenförmigen Drahtführung hängt im Wesentlichen vom Drahtdurchmesser, der Spaltweite, der Korngrösse und des zu erwartenden Kornüberstandes ab. Beispielsweise kann zur Bearbeitung einer Schleifscheibe mit Korngrösse D46 bei einem Drahtelektrodendurchmesser 0,33mm eine 0,4mm breite scheibenförmige Drahtführung verwendet werden.

Die Vorrichtung zum rotativen Drahterodieren eines Werkstückes gemäss der vorliegenden Erfindung umfasst wie erwähnt eine scheibenförmig ausgebildete Drahtführung. Der Begriff "scheibenförmig" bezieht sich in erster Linie auf das Aspektverhältnis, d.h. auf das Verhältnis der Fläche zur Breite der Drahtführung. Die Scheibenförmige Drahtführung muss nicht unbedingt, wie im Falle der in Figur 1 dargestellten Seitenansicht kreisförmig sein; sie kann beispielsweise auch prismatisch sein.

Die scheibenförmige Drahtführung weist zumindest im Drahtführungsbereich, d.h. zumindest in jenem Bereich des Scheibenumfangs in welchem die Drahtelektrode auf der Drahtführung liegt ein bogenförmiges oder gekrümmtes Profil auf. Weiterhin weist die scheibenförmige Drahtführung im Wirkbereich vorzugsweise eine Aussparung auf (siehe Figur 5a). Auf diese Weise wird die Drahtführung durch die Funkenerosion nur in geringem Masse beschädigt. Ausserdem ergibt sich der Vorteil dass das Dielektrikum in optimaler Weise von der Rückseite der Drahtelektrode radial an den Wirkbereich herangeführt werden kann. Die abgetragenen Erosionspartikel können sich im bereits im Freiraum der Aussparung wiederverfestigen sodass eine Ablagerung von Erosionspartikel an der Drahtführung weitgehend vermieden wird.

Die Aussparung hat vorzugsweise eine Breite von einigen Millimetern, beispielsweise 4mm. Somit liegen die beiden letzten Stützpunkte der Drahtelektrode noch sehr nahe beim Funkenspalt und die Drahtauslenkung ist minimal.

Bevorzugt weist die scheibenförmige Drahtführung, die Drahtführungshalterung und/oder die Basis der Drahtführungshalterung Referenzmerkmale auf, mit denen sich die Bauteile besonders einfach und reproduzierbar montieren lassen. Die scheibenförmig ausgebildete Drahtführung weist beispielsweise eine zentrale Bohrung auf, die sich mit einem oder mehreren Stiften auf der Seite der Drahtführungshalterung zentrieren lässt. Ein weiteres Referenzmerkmal bestimmt die Position der Aussparung an der Drahtführung gegenüber der Drahtführungshalterung, und damit die Ausrichtung der Drahtelektrode im Bearbeitungsbereich.

Vorzugsweise ist die scheibenförmige Drahtführung derart gestaltet, dass diese in mindestens zwei unterschiedlichen Positionen montierbar ist. Dazu weist die scheibenförmige Drahtführung an ihrem Umfang mehrere Aussparungen auf. Die scheibenförmige Drahtführung ist vorzugsweise zumindest teilweise symmetrisch gestaltet. Auf diese Weise kann die scheibenförmige Drahtführung in unterschiedlichen Winkellagen montiert, und mehrfach benutzt werden.

Figur 5a zeigt eine Seitenansicht einer möglichen Ausgestaltung der scheibenförmigen Drahtführung. Die Drahtführung weist beispielsweise folgende Merkmale auf: eine zentrale Bohrung, vier Bohrungen, sowie vier Aussparungen am Umfang der scheibenförmigen Drahtführung. Die Drahtführungshalterung hat einen zentralen Stift, auf den die zentrale Bohrung der scheibenförmigen Drahtführung passt. Damit die Drahtelektrode im Bearbeitungsbereich korrekt ausgerichtet ist, umfasst die Drahtführungshalterung einen weiteren Stift, der auf eine der vier Bohrungen auf der scheibenförmigen Drahtführung passt. Damit sind alle Freiheitsgrade blockiert und die Lage der Drahtführung ist eindeutig definiert. Zur Festlegung der Winkellage sind dem Fachmann alternative Maßnahmen bekannt; beispielsweise kann er die zentrale Bohrung bzw. der zentrale Stift als Polygon gestalten, oder eine nicht aktive Aussparung als Referenzmerkmal benutzen, welche die dargestellten Bohrungen und deren Funktion ersetzen.

Die scheibenförmige Drahtführung gemäß Figur 5a kann also in vier unterschiedlichen Positionen eingesetzt werden. Damit ist eine derartige Drahtführung entsprechend wirtschaftlicher als eine bekannte scheibenförmige Drahtführung.

### Bezugszeichenliste

- 1: Drahtelektrode
- 2: Werkstück, bzw. Schleifscheibe
- 3: Arbeitspunkt
- 4: Scheibenförmige Drahtführung
- 5: Drahtführungshalterung
- 6: Vorführung und Stromzuführung für Drahtelektrode
- 7: Nachführung und Stromzuführung für Drahtelektrode
- 8: Drahtführungshalterung
- 9: Zentrierstift
- 10: Schwenkachse
- 11: Stromzuführung zum Werkstück
- 12: Drehspindel für zu bearbeitendes Werkstück
- 13: Spülung
- 14: Pulsgenerator

## Patentansprüche

1. Vorrichtung zum rotativen Drahterodieren eines Werkstücks mit einer scheibenförmigen Drahtführung (8) zur Führung einer Drahtelektrode (1) für das rotative Drahterodieren eines Werkstückes, wobei die Dicke der scheibenförmigen Drahtführung (8) kleiner ist als der 1,5-fache Betrag des Durchmessers der Drahtelektrode (1), wobei die Drahtführung (8) im Weiteren am Umfang eine Führungsnut aufweist, **dadurch gekennzeichnet, dass** die Drahtführung (8) im Wirkbereich der Funkenerosion eine Aussparung aufweist.

2. Vorrichtung nach Anspruch 1, **dadurch gekennzeichnet, dass** die Drahtführung (8) zumindest im Wirkbereich einen gekrümmten Profilbereich aufweist.

3. Vorrichtung nach einem der Ansprüche 1 oder 2, **dadurch gekennzeichnet, dass** die Führungsnut am Umfang der Drahtführung (4) V-förmig ist.

4. Vorrichtung nach einem der Ansprüche 1 bis 3, **dadurch gekennzeichnet, dass** diese an ihrem Umfang mehrere gekrümmte Drahtführungsbereiche mit jeweils einer Aussparung aufweisen, wobei die Drahtführung (8) in mehreren Positionen um ihre eigene Achse gedreht und montiert werden kann, so dass jeweils neue Drahtführungsbereiche im Wirkbereich der Funkenerosion zu liegen kommen.

5. Vorrichtung nach einem der Ansprüche 1 bis 4, **dadurch gekennzeichnet, dass** die scheibenförmige Drahtführung geometrische Referenzmerkmale zur genauen Ausrichtung und Montage der Drahtführung gegenüber der Drahtführungshalterung aufweist.

6. Vorrichtung nach einem der Ansprüche 1 bis 5, **dadurch gekennzeichnet, dass** die scheibenförmige Drahtführung zumindest teilweise rotationssymmetrisch ausgebildet ist.

7. Vorrichtung nach einem der vorstehenden Ansprüche, **dadurch gekennzeichnet, dass** die Vorrichtung derart ausgebildet ist, dass die relative Winkellage zwischen Drahtführung (4) und Werkstück (2) um eine Achse (10) parallel zur Drahtlaufrichtung am Arbeitspunkt (3) einstellbar ist.

8. Vorrichtung nach einem der vorstehenden Ansprüche, **dadurch gekennzeichnet, dass** zur Einstellung der relativen Winkellage zwischen gekrümmter Drahtführung (4) und Werkstück (2) um eine Achse (10) parallel zur Drahtlaufrichtung am Arbeitspunkt (3), die Drahtführung (4) selbst oder eine der Drahtführung (4) zugeordnete Drahtführungshalterung (5) oder die gesamte Vorrichtung für das rotative Drahterodieren winkeleinstellbar ausgebildet ist.

9. Vorrichtung nach einem der vorstehenden Ansprüche, **dadurch gekennzeichnet, dass** zur Einstellung der relativen Winkellage zwischen Drahtführung (4) und Werkstück (2) um eine Achse (10) parallel zur Drahtlaufrichtung am Arbeitspunkt (3) ein Spindelkopf, in dem das Werkstück eingespannt ist, einstellbar ausgebildet ist.

10. Vorrichtung nach einem der vorstehenden Ansprüche, **dadurch gekennzeichnet, dass** die relative Winkellage zwischen +20° und -20° einstellbar ist.

11. Vorrichtung nach einem der vorstehenden Ansprüche, **dadurch gekennzeichnet, dass** die relative Winkellage in festen Schritten oder stufenlos einstellbar und arretierbar ist.

12. Vorrichtung nach einem der vorstehenden Ansprüche, **dadurch gekennzeichnet, dass** eine Schwenkeinheit zur Einstellung der relativen Winkellage aus Festkörperführungen besteht.

13. Vorrichtung nach Anspruch 12, **dadurch gekennzeichnet, dass** die Schwenkachse (10) zur Einstellung der relativen Winkellage mit der tangentialen Laufrichtung der Drahtelektrode (1) am Arbeitspunkt (3) zusammenfällt.

14. Vorrichtung nach einem der vorstehenden Ansprüche, **dadurch gekennzeichnet, dass** der scheibenförmig ausgebildeten Drahtführung zumindest eine Hilfsführung (6, 7), vorzugsweise jeweils eine Vorführung (6) und Nachführung (7) zugeordnet sind.

## Claims

1. Device for rotational wire electro-erosion of a workpiece with a disc-shaped wire guide (8) for guiding a wire electrode (1) for the rotational wire electro-erosion of a workpiece, wherein the thickness of the disc-shaped wire guide (8) is less than 1.5 times the diameter of the wire electrode (1), wherein the wire guide (8) also has a guide groove on the circumference, **characterized in that** the wire guide (8) has a cutout in the effective region of the spark erosion.

2. Device according to Claim 1, **characterized in that** the wire guide (8) has a curved profile region at least in the active region.

3. Device according to one of Claims 1 or 2, **characterized in that** the guide groove on the circumference of the wire guide (4) is V-shaped.

4. Device according to one of Claims 1 to 3, **characterized in that** the said device has on its circumference a plurality of curved wire guide regions each with a cutout, wherein the wire guide (8) can be rotated into a plurality of positions about its own axis and mounted, with the result that in each case new wire guide regions come to rest in the effective region of the spark erosion.

5. Device according to one of Claims 1 to 4, **characterized in that** the disc-shaped wire guide has geometric reference features for the precise orientation and mounting of the wire guide with respect to the wire guide holder.

6. Device according to one of Claims 1 to 5, **characterized in that** the disc-shaped wire guide is embodied at least partially in a rotationally symmetrical fashion.

7. Device according to one of the preceding claims, **characterized in that** the device is embodied in such a way that the relative angular position between the wire guide (4) and the workpiece (2) can be adjusted about an axis (10) parallel to the wire running direction at the working point (3).

8. Device according to one of the preceding claims, **characterized in that** in order to adjust the relative angular position between the curved wire guide (4) and the workpiece (2) about an axis (10) parallel to the wire running direction at the working point (3), the wire guide (4) itself or a wire guide holder (5) which is assigned to the wire guide (4) or the entire device for the rotational wire electro-erosion is embodied with adjustable angles.

9. Device according to one of the preceding claims, **characterized in that** in order to adjust the relative angular position between the wire guide (4) and the workpiece (2) about an axis (10) parallel to the wire running direction at the working point (3), a spindle head in which the workpiece is clamped is of adjustable design.

10. Device according to one of the preceding claims, **characterized in that** the relative angular position can be adjusted between +20° and -20°.

11. Device according to one of the preceding claims, **characterized in that** the relative angular position can be adjusted and locked in fixed steps or in an infinitely variable fashion.

12. Device according to one of the preceding claims, **characterized in that** a pivoting unit for adjusting the relative angular position is composed of fixed body guides.

13. Device according to Claim 12, **characterized in that** the pivoting axis (10) for adjusting the relative angular position coincides with the tangential running direction of the wire electrode (1) at the working point (3).

14. Device according to one of the preceding claims, **characterized in that** the wire guide which is embodied in a disc shape is assigned at least one auxiliary guide (6, 7), preferably in each case one leading guide (6) and one trailing guide (7).

## Revendications

1. Dispositif pour l'électroérosion rotative à fil d'une pièce, comprenant un guide-fil en forme de disque (8) pour le guidage d'un fil-électrode (1) pour l'électroérosion rotative à fil d'une pièce, l'épaisseur du guide-fil en forme de disque (8) étant inférieure à 1,5 fois la valeur du diamètre du fil-électrode (1), le guide-fil (8) présentant en outre au niveau de la périphérie une rainure de guidage, **caractérisé en ce que** le guide-fil (8) présente un évidement dans la région d'action de l'électroérosion.

2. Dispositif selon la revendication 1, **caractérisé en ce que** le guide-fil (8) présente au moins une région profilé courbe dans la région d'action.

3. Dispositif selon l'une quelconque des revendications 1 ou 2, **caractérisé en ce que** la rainure de guidage à la périphérie du guide-fil (4) est en forme de V.

4. Dispositif selon l'une quelconque des revendications 1 à 3, **caractérisé en ce que** celui-ci présente au niveau de sa périphérie plusieurs régions de guidage de fil courbes ayant chacune un évidement, le guide-fil (8) pouvant être tourné et monté dans plusieurs positions autour de son propre axe de telle sorte que de nouvelles régions de guidage de fil viennent à chaque fois se placer dans la région d'action de l'électroérosion.

5. Dispositif selon l'une quelconque des revendications 1 à 4, **caractérisé en ce que** le guide-fil en forme de disque présente des caractéristiques de référence géométriques pour l'orientation et le montage précis du guide-fil par rapport au support de guide-fil.

6. Dispositif selon l'une quelconque des revendications 1 à 5, **caractérisé en ce que** le guide-fil en forme de disque est réalisé au moins en partie avec une symétrie de révolution.

7. Dispositif selon l'une quelconque des revendications précédentes, **caractérisé en ce que** le dispositif est réalisé de telle sorte que la position angulaire relative entre le guide-fil (4) et la pièce (2) puisse être ajustée autour d'un axe (10) parallèle à la direction d'avance du fil au point de travail (3).

8. Dispositif selon l'une quelconque des revendications précédentes, **caractérisé en ce que** pour l'ajustement de la position angulaire relative entre le guide-fil courbe (4) et la pièce (2) autour d'un axe (10) parallèlement à la direction d'avance du fil au point de travail (3), le guide-fil (4) lui-même ou un support de guide-fil (5) associé au guide-fil (4) ou l'ensemble du dispositif pour l'électroérosion rotative à fil est réalisé de manière ajustable angulairement.

9. Dispositif selon l'une quelconque des revendications précédentes, **caractérisé en ce que** pour l'ajustement de la position angulaire relative entre le guide-fil (4) et la pièce (2) autour d'un axe (10) parallèlement à la direction d'avance du fil au point de travail (3), une tête de broche dans laquelle est serrée la pièce est réalisée de manière ajustable.

10. Dispositif selon l'une quelconque des revendications précédentes, **caractérisé en ce que** la position angulaire relative peut être ajustée entre +20° et -20°.

11. Dispositif selon l'une quelconque des revendications précédentes, **caractérisé en ce que** la position angulaire relative peut être ajustée en incréments fixes ou en continu et bloquée.

12. Dispositif selon l'une quelconque des revendications précédentes, **caractérisé en ce qu'**une unité de pivotement pour l'ajustement de la position angulaire relative se compose de guides à corps solides.

13. Dispositif selon la revendication 12, **caractérisé en ce que** l'axe de pivotement (10) pour l'ajustement de la position angulaire relative coïncide avec la direction d'avance tangentielle du fil-électrode (1) au point de travail (3).

14. Dispositif selon l'une quelconque des revendications précédentes, **caractérisé en ce qu'**au moins un guide auxiliaire (6, 7), de préférence à chaque fois un guide antérieur (6) et un guide postérieur (7), sont associés au guide-fil réalisé en forme de disque.
